# EUROPÄISCHE PATENTSCHRIFT

(11) **EP 1 433 677 B1**
(45) Veröffentlichungstag und Bekanntmachung des Hinweises auf die Patenterteilung: **19.12.2007**
(21) Anmeldenummer: 03024853.8
(22) Anmeldetag: 31.10.2003
(51) Int. Cl.: B60S 3/00

(54) **Reinigungsvorrichtung für Einkaufswagen**
Cleaning device for shopping trolley
Dispositif de nettoyage pour chariot d'achat

(30) Priorität: 31.10.2002 DE 10251165
(43) Veröffentlichungstag der Anmeldung: 30.06.2004
(73) Patentinhaber: HHP Maschinen- und Reinigungsanlagenbau GbR, 19258 Boizenburg (DE)
(72) Erfinder: Panofski, Stephan, 21376 Salzhausen (DE)
(74) Vertreter: Schupfner, Georg

(56) Entgegenhaltungen:
- EP-A- 0 262 985
- WO-A-01/15824
- WO-A-03/002391
- DE-U1- 29 901 282
- US-A- 3 375 592
- US-A- 3 444 867
- US-B1- 6 427 707

## Beschreibung

Die Erfindung bezieht sich auf eine Reinigungsvorrichtung für Einkaufswagen, die in Warenmärkten, insbesondere in Lebensmittelmärkten zum Einsatz kommen, in der die Einkaufswagen in einem Behälter mittels einer Reinigungsflüssigkeit mit Flüssigkeitsstrahlen besprüht werden, wobei der Behälter mittels eines Fahrzeuges zu den einzelnen Einsatzorten transportierbar ist.

Aus der DE 198 57 915 A1 ist eine mobile Reinigungs- bzw. Waschanlage für Einkaufswagen aller Art bekannt. Diese mobile Reinigungs- bzw. Waschanlage hat eine Waschbox, die auf einen LKW verladen werden kann, zum Gegenstand. Am Einsatzort kann sie von dem LKW abgesetzt werden. Die Waschbox kann aber nur einen einzigen Einkaufswagen aufnehmen. In der Waschbox befinden sich Düsen, mittels derer eine reinigende Flüssigkeit auf den Einkaufswagen sprühbar ist. Zum Besprühen und zur Aufbereitung des Sprühwassers sind geeignete Aggregate, wie Pumpen, Ventile, Filter, Leitungen, Behälter, Messgeräte und eine Anlagensteuerung, vorgesehen.

Die WO 03/002391 und deren Äquivalent, die DE 101 31 398-A1, offenbaren eine mobile Reinigungseinrichtungen aufweisend einen Container, an den die Einkaufswagen im Pulk herangeführt werden, wobei die Einkaufwagen an einer Seite des Containers in diesen hineingeführt und an der selben Seite nach der Reinigung wieder aus diesem herausgeführt werden. Die Einkaufswagen werden U-förmig in dem Container geführt. Den Schriften ist nicht zu entnehmen, wie die Einkaufswagen aus dem Pulk heraus vereinzelt und im Container geführt werden. Die Reinigung erfolgt zumindest teilweise mittels Waschbürsten. Die DE 101 31 398-A1 und die WO 03/002391 sind nicht vorveröffentlicht. Die WO 03/002391 stellt Stand der Technik gemäß Art. 54(3) EPÜ dar.

Die US 5,993,739 hat die Reinigung von verfahrbaren Gegenständen wie Rollstühlen oder Einkaufswagen zum Gegenstand. Diese werden durch ein mittig geführtes halbhohes Band befördert und werden im Container gewendet, d.h. sie verlassen den Container an der selben Seite wie sie in diesen eingefahren werden.

Aus der US 3,698,029, der DE 29901282 und der US 4,807,319 sind Anhänger bekannt, in die die Einkaufswagen zur Reinigung an einem Ende hineingeführt und am gegenüberliegenden Ende wieder herausgeführt werden.

Die vorbeschriebenen mobilen Reinigungs- bzw. Waschanlagem für Einkaufswagen haben sich auf dem Markt nicht durchsetzen können. Die Wagen werden heute, wenn eine Reinigung überhaupt erfolgt, sporadisch von Hilfskräften von Hand gereinigt. Untersuchungen haben gezeigt, dass der Zustand der auf dem Markt befindlichen Einkaufswagen äußerst schlecht ist und dass die Notwendigkeit einer Reinigung besteht.

Es ist Aufgabe der Erfindung eine Reinigungsvorrichtung für Einkaufswagen zu schaffen, die praktikabel durchführbar ist und die Reinigung einer Vielzahl von Einkaufswagen in vertretbaren Zeit ermöglicht. Insbesondere sollen das komplizierte aus dem Stand der Technik bekannte Wenden der Einkaufswagen im Bereich des geschlossenen Endes des Containers vermieden werden und der Einkaufswagen längs der Reinigungs- und Trockenstrecke sicher, d.h. vor allem störungsfrei, transportiert werden.

Die gestellte Aufgabe ist erfindungsgemäß gelöst durch eine Reinigungsvorrichtung gemäß Anspruch 1 und dem Verfahren nach Anspruch 18. Bevorzugte Ausführungsformen sind Gegenstand der Unteransprüche oder nachfolgend beschrieben.

Die erfindungsgemäße Vorrichtung weist einen Behälter auf, in dem Transport-Fördereinrichtungen für eine Mehrzahl von Einkaufswagen angeordnet sind, vorzugsweise 3 bis 5 Einkaufswagen pro Zeiteinheit, von denen zumindest eine längs ihrer Förderstrecke dem reinigenden Besprühen mit einer Reinigungsflüssigkeit und zumindest eine andere längs ihrer Förderstrecke dem Trocknen mit aufgeblasener Luft dient.

Es ist vorgesehen, dass der Behälter mittels eines Fahrzeuges transportierbar und ggf. von dem Fahrzeug absetzbar ist, vorzugsweise bis auf etwa Bodenhöhe und unabhängig hiervon zwischen den Hinterrädern des Fahrzeuges. In weiterer Ausgestaltung der Erfindung ist der Behälter ein Container. Bei dem Container handelt es sich vorzugsweise um einen Normcontainer mit den Maßen Länge 5 m, Höhe 2,5 m, Breite 2,5 m.

Eine solche Reinigungsvorrichtung ermöglicht eine serienmäßige Reinigung und Trocknung, so dass in kurzer Zeit viele Einkaufswagen gewaschen und getrocknet dem erneuten Gebrauch zur Verfügung stehen. Eine solche Reinigungsvorrichtung kann, da mit ihr in kürzester Zeit viele - z.B. 8 Einkaufswagen pro Minute - Einkaufswagen gereinigt werden, erfolgversprechend auf dem Markt eingeführt werden. Da sie mobil ist und an den jeweils gewünschten Waschplatz transportiert werden kann, sind vielseitige Einsatzmöglichkeiten gegeben.

Die Transport-Fördereinrichtungen zum Reinigen mit einer Reinigungsflüssigkeit und die zum Trocknen sind in gegenläufiger Richtung betreibbar, wobei beide Transport-Fördereinrichtungen fördertechnisch mittels einer Übergabe-Fördereinrichtung verbunden sind. Ein derartiges Transportsystem lässt sich in einem Container auf beispielsweise einer Länge von 4 Metern unterbringen.

Hierzu können die Transport-Fördereinrichtung ein oder mehrere Förderbänder aufweisen, auf denen die Einkaufswagen vorzugsweise unterstützt durch Mitnehmer in Förderrichtung bewegt werden. Insbesondere sind die Förderbänder als jeweils Paare von Förderbandstreifen ausgebildet, die als Auflagen für zumindest zwei Räder der Einkaufswagen dienen, d.h. Vorder- und/oder Hinterräder. Zwischen den Förderbandpaaren verbleibt genügend Platz, um die Reinigungsflüssigkeit nach unten ablaufen zu lassen.

Nach einer weiteren Ausgestaltung der Erfindung ist vorgesehen, dass die Mitnehmer wenigstens an dem Förderband, auf dem die Einkaufswagen besprüht werden, an ihren freien Enden mit Röllchen versehen sind. Die Röllchen verhindern, dass sich die Mitnehmer an den Rädern verhaken.

In weiterer Ausgestaltung der Erfindung ist vorgesehen, dass die Förderbänder mit Seitenführungen für die Räder versehen sind. Auf diese Weise wird ein Abrutschen der Räder verhütet.

Werden nur die Vorder- oder nur die Hinterräder von den Förderbandstreifen erfasst, laufen die jeweils anderen Räder vorzugsweise in ein oder zwei, insbesondere zwei parallel zu den Förderbandstreifen angeordneten Schienen. Besonders bevorzugt laufen die Hinterräder auf den Förderbandstreifen und die Vorderräder werden selbstrollend in den Schienen geschoben, z.B. entlang der Reinigungsstrecke, bzw. gezogen, z.B. entlang der Trocknungsstrecke. Die Schiene bzw. die beiden Schienen weisen vorzugsweise zumindest jeweils einen hochstehenden Schienerand auf, insbesondere zwei. Jede der Schienen kann auch mit Gefälle nach innen ausgebildet sein, um die Räder parallel zu den Förderbandstreifen zu führen und zu zentrieren. Die Schienen / beiden Schienen sind insbesondere zwischen den Förderbandstreifen und parallel zu diesen angeordnet.

Besonders bevorzugt werden zwei Förderbandstreifen eingesetzt, in denen pro Förderbandstreifen entweder Vorder- und Hinterrad einer Seite laufen, oder nur die Vorderräder und insbesondere nur die Hinterräder. Die Förderbandstreifen haben eine gewisse Breite, etwa 5 bis 20 cm, besonders bevorzugt 8 bis 15 cm, um die in unterschiedlichen parallelversetzten Spuren laufenden Räder aufzunehmen.

Die Förderbänder haben vorzugsweise etwa die Länge von zwei Einkaufwagen, z.B. etwa 1,80 bis 2,60 m. Sie können an der Seite Führungen zum Verhindern des Abrutschens vom Förderband aufweisen. Der Mitnehmer greift vorzugsweise hinter die Hinterräder ein. Am Ende des ersten Förderbandes wird der Einkaufswagen auf eine auf einem Schlitten montierte Aufnahme für die Räder des Einkaufswagens geschoben.

Aus Steuerungsgründen läuft das zweite Förderband (Trockenförderband), vorzugsweise um zumindest ca. 4 cm/sec. schneller, insbesondere um zumindest ca. 8 cm/sec. als das erster Förderband. Das erste Förderband hat eine Geschwindigkeit von z.B. ca. 15 bis 35 cm/sec, der Schlitten von ca. 25 bis 60 cm/sec.
In weiterer Ausgestaltung der Erfindung ist vorgesehen, dass beiderseits der Transport-Fördereinrichtung für das reinigende Besprühen mit Flüssigkeit Sprühdüsen vorgesehen sind, die auf die Einkaufswagen gerichtet sind. Die Sprühdüsen können so angeordnet sein, das sie vorzugsweise Sprühzonen in Form flächiger Bereiche bilden, die vorteilhafterweise im wesentlichen quer zur Förderrichtung ausgerichtet sind. Ebenso sind beiderseits der Transport-Fördereinrichtung für das Aufblasen von Trocknungsluft Luftblasdüsen vorgesehen.

In weiterer Ausgestaltung der Erfindung ist vorgesehen, dass die Transport-Fördereinrichtungen in Förderrichtung beiderseits mit Schutzwänden versehen sind, wobei - soweit möglich - eine Schutzwand vorteilhaft von dem Außenbehälter selbst gebildet wird. Diese Schutz- oder Trennwände trennen die Reinigungsbereiche von den Trocknungsbereichen und bilden etwa eine am Anfang und Ende offene Reinigungsbox bzw. Trocknungsbox. Flüssigkeitsdüsen und Luftblasdüsen sind bevorzugt an den Schutz- oder Trennwänden angebracht. In weiterer Ausgestaltung der Erfindung ist vorgesehen, dass die Trocknungsluft mittels Abwärme des Antriebsmotors des Fahrzeuges erwärmt wird.

In weiterer Ausgestaltung der Erfindung ist vorgesehen, dass die gesprühte Reinigungsflüssigkeit nach dem Besprühen in einem Sammelbehälter gesammelt, reinigend aufbereitet und wieder in den Sprühprozess eingeleitet wird.

Zwischen den beiden Förderbändern spannt sich begehbare Zone, etwa ein Steg auf, der Zugang und Montage ermöglicht und gleichzeitig Servicearbeiten wie das Austauchen bzw. Reinigen von Filtern oder sogar das Herausnehmen von Einkaufswagen ermöglicht.

In weiterer Ausgestaltung der Erfindung ist vorgesehen, dass die Übergabe-Fördereinrichtung am Ende der dem Besprühen dienenden Reinigungsförderstrecke die gereinigten, noch nassen Einkaufswagen übernimmt und dem Anfang der zumindest teilweise dem Trocknen dienenden Trocknungsförderstrecke zuführt, vorzugsweise taktweise.

Hierzu kann die Übergabe-Fördereinrichtung mittels einer Kette oder eines Transportbandes, insbesondere mittels eines Seilzuges von der einen Transport-Fördereinrichtung zur anderen Transport-Fördereinrichtung verschiebbar sind.

Die Übergabe-Fördereinrichtung ist als zwischen den Transport-Fördereinrichtungen verfahrbarer Schlitten ausgebildet. Zur sicheren Übergabe der Einkaufswagen von den Förderbändern auf den Schlitten kann der Schlitten, bzw. eine Auf- bzw. Abfahrrampe zusätzlich auf die Transport-Fördereinrichtungen zu und von diesen wegbewegbar sein.

Weiterhin kann der Schlitten nach einer weiteren Ausgestaltung der Erfindung Ausgleichsbleche als Auf- bzw. Abfahrrampe aufweisen, die der Übernahme der Einkaufswagen von der Übergabe-Fördereinrichtung und deren Übergabe an die Transport-Fördereinrichtung zum Trocknen dienen, indem ggf. die Ausgleichsbleche allein oder mit dem Schlitten an deren Förderbänder heranfahren.

Die auf dem Schlitten montierten Aufnahmen für die Räder haben vorzugsweise die Form von U-Schienen.

Unterstützt kann das Auffahren des Einkaufswagens auf die auf den Schlitten bzw. die auf dem Schlitten montierte Aufnahme durch eine Neigung des ersten Förderbandes und / oder der Aufnahme des Schlittens zum Ende des Containers hin sein, etwa um 2 bis 10°,vorzugsweise um 3 bis 7°, aus der Horizontalen. Befindet sich der Einkaufswagen vollständig auf der Aufnahme des Schlittens wird der Schlitten zur anderen Seite gefahren, um den Einkaufswagen an das zweite parallel versetzte Förderband zu übergeben.

Um zu verhindern, dass der Einkaufswagen bei der Beförderung auf dem Schlitten kippt, sind nach einer Ausgestaltung seitliche mit dem Schlitten verbundene Stützglieder vorgesehen, die den Einkaufswegen seitlich vor dem Umkippen sichern. Die Stützglieder können mit Stempeln versehen sein, die seitlich an den Einkaufswagen heranfahren und diesen während des Verfahrens fixieren.

Gleichzeitig können ein oder mehrere Niederhalter vorgesehen sein, die den Einkaufswagen auf dem Schlitten vorzugsweise zum Ende des Containers hin niederhalten, insbesondere vorne, und gleichzeitig den Einkaufswagen beim bzw. nach dem Auffahren auf den Schlitten gegen den Endanschlag ziehen. Der oder die Niederhalter sind vorzugsweise durch einen Berührungsschalter gesteuert und werden zum Heranziehen und Fixieren in Betrieb gesetzt, wenn sich der Einkaufswagen auf dem Schlitten dem Endanschlag ausreichend genähert hat. Der Niederhalter greift vorzugsweise oben vorne in den Einkaufswagen ein und ist weiter bevorzugt hydraulisch betätigt.

Die Übergabe an das zweite Förderband erfolgt vorzugsweise mittels einer hydraulischen Vorrichtung, etwa einem oder mehreren Stempeln, die den Einkaufswagen auf das zweite Förderband aufschieben, die weiter bevorzugt im Bereich der hinteren Containerwand angebracht sind.

In weiterer Ausgestaltung der Erfindung ist vorgesehen, dass die Einkaufswagen mittels eines Auswerfers, z.B. in Form eines hydraulischen Stempels, vom Schlitten bzw. dem auf dem Schlitten montierten Aufnahmen auf die dem Trocknen dienende Förderstrecke aufschiebbar sind.

In weiterer Ausgestaltung der Erfindung ist vorgesehen, dass neben bzw. teilweise über den Förderbändern ggf. flexible Abdeckungen vorgesehen sind, die die Räder der Einkaufswagen und deren Lager möglichst weitgehend vor dem Reinigungsmittel schützen.

In weiterer Ausgestaltung der Erfindung ist vorgesehen, dass das Reinigungsmittel unabhängig voneinander nicht schäumend, ökologisch abbaubar und/oder werbungsschonend ausgebildet ist.

Im besonderen Maße ist es gewünscht, den Griff der Einkaufwagen zu reinigen. Hierfür ist es vorgesehen Bürsten an den Griff des Einkaufwagens heranzuführen, vorzugsweise zwei oder drei rotierende Bürsten die den Griff umschließen und mittels Schwenkbügel an den Griff heranführbar sind. Besonders bevorzugt erfolgt die Reinigung der Griffe des Einkaufwagens manuell gesteuert.

Die Trocknung der Wagen erfolgt vorzugsweise über heiße Luft, die durch Düsen auf den Wagen geleitet wird. Um eine Luftstau zu verhindern sind Luftkanäle oder sogar Luftabsaugvorrichtungen vorgesehen, vorzugsweise unter den Einkaufswagen, etwa am Montagerahmen.

In weiterer Ausgestaltung der Erfindung ist vorgesehen, dass die Bauteile der Reinigungsvorrichtung zu Gruppen zusammengefasst sind, die einzeln herausnehmbar sind zu Zwecken der Wartung und Reparatur, etwa durch im Außenbehälter angebrachte zu öffnende Teilflächen oder bevorzugt durch Herausziehen aus dem Container an der Ein- und Auslassöffnung für die Einkaufswagen.

In dem Container sind die Reinigungsvorrichtungen einschließlich der Fördereinrichtungen vorzugsweise auf einer Plattform angeordnet, die in den Container einsetzbar, vorzugsweise einschiebbar, und dort fixierbar ist. Dies erleichtert die Reparatur und Wartung und ermöglich es die Reinigungsvorrichtungen einschließlich der Fördereinrichtungen schnell auszutauschen um die sofortige Einsatzbereitschaft des Reinigungsfahrzeuges zu gewährleisten. Gleiches gilt für die darunter befindliche Auffangwanne(n). Die Plattform liegt vorzugsweise auf dem Wannenrand auf, der z.B. von einem Grundrahmen gebildet sein kann, von dem ausgehend sich der Wannenboden zu einem Abfluss hin absenkt. Die Plattform kann mittels Rollen am oder im Plattformrahmen aufgeschoben sein, z.B. Polyamidrollen.

Die Erfindung wird anhand der Zeichnung näher erläutert. Es zeigen:
Fig. 1 einen LKW mit einem Container, der eine Reinigungsvorrichtung für Einkaufswagen enthält und der vom LKW absetzbar ist,
Fig. 2 den Container mit eingebauten Fördereinrichtungen und einer quer verlaufenden Übergabeeinrichtung mit Darstellung des Förderweges in Draufsicht bei entfernter Dachplatte des Containers,
Fig. 3 die Ansicht nach Fig. 2 mit eingetragenen Funktionsteilen,
Fig. 4 eine Seitenansicht der Transporteinrichtung im Reinigungsbereich am Auslaufende der Einkaufswagen mit einem Übergabeschlitten der Übergabeeinrichtung,
Fig. 5 den in Fig. 4 dargestellten Bereich in Draufsicht,
Fig. 6a und 6b schematische Schnitte durch die Darstellung nach Fig. 2 längs der Linie VI-VI,
Fig. 7 die Anordnung des Reinigungsbandes, der Übergabefördereinrichtung und des Trockenbandes nebst den am Ende des Containers befindlichen Wassertank,
Fig. 8a eine Bürstenvorrichtung mit Schwenkbügel, Fig. 8b einen Bürstenkopf mit drei Bürsten als Teil der Bürstenvorrichtung sowie Fig. 8c einen Bürstenkopf mit zwei Bürsten als Teil der Bürstenvorrichtung,
Fig. 9 eine Längsschnitt mit Reinigungsförderband, Übergabevorrichtung und zweiteiligem Wassertank, und
Fig. 10 eine Längsschnitt mit Trocknungsförderband, Übergabevorrichtung und zweiteiligem Wassertank.

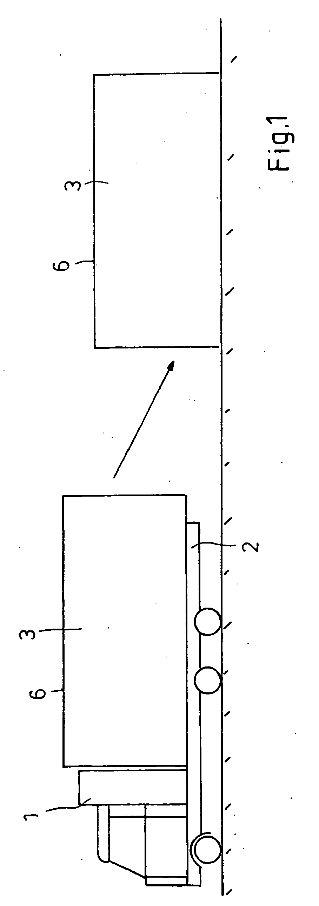

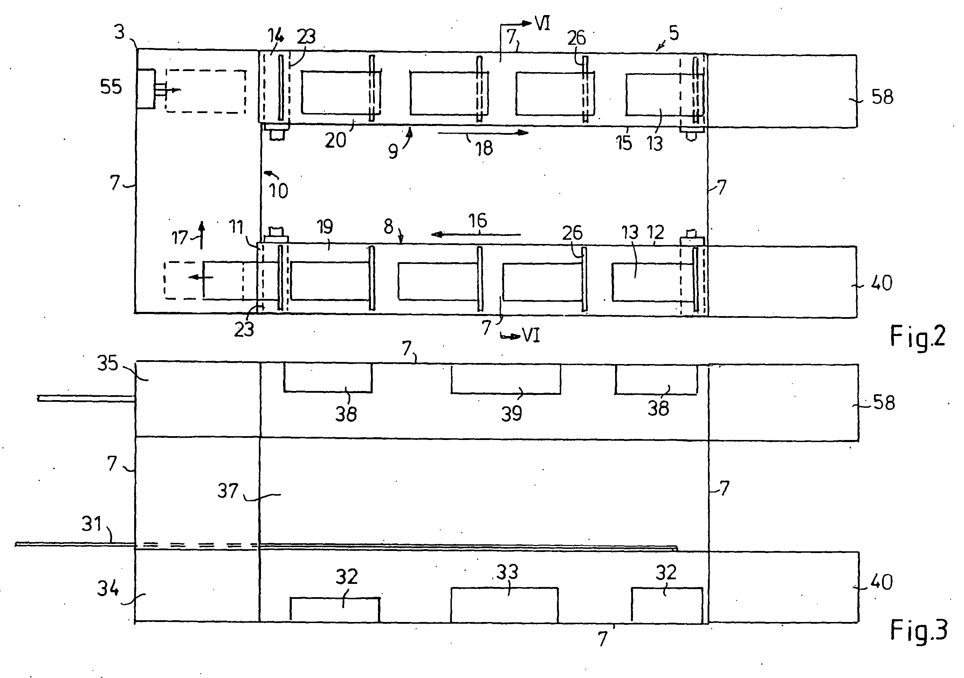

Fig. 1 zeigt ein Fahrzeug, beispielsweise einen LKW 1, auf dessen Ladefläche 2 ein Behälter, beispielsweise ein Container 3 von vorzugsweise 4 oder 5 Metern Länge, angeordnet ist. In dem Container 3 ist eine Reinigungsvorrichtung 5 für Einkaufswagen 13 angeordnet, die in den Fig. 2 bis 6 näher beschrieben ist. Der Container 3 wird mittels des LKW zum Einsatzort gefahren und dort auf dem Boden 4 abgestellt. Das Abstellen erfolgt vorzugsweise im Fahrzeugbereich des LKWs, um die während des Betriebes bestehen bleibenden Verbindungen zwischen LKW 1 und Container 3 kurz zu halten. Zum Abstellen wird der Container 3 also nur aus der angehobenen Transportposition auf die Betriebsposition am Boden abgesenkt.

Fahrzeug 1 und Container 3 werden als unabhängiges Arbeitsmittel betrieben. Das heißt, es werden während des Betriebes keine Außenanschlüsse zu Gebäuden oder Festinstallationen irgendwelcher Art benötigt. Der Betrieb der Elektromotoren erfolgt mittels eines vom Motor des LKWs angetriebenen Generators, der beispielsweise mit der 24V-Spannungs-Versorgung des LKWs arbeitet.

Fig. 2 zeigt die Reinigungsvorrichtung 5 in dem Container 3 bei abgehobenem Containerdach 6. Die Wände 7 des Containers 3 umschließen die Reinigungsvorrichtung 5. In der Reinigungsvorrichtung 5 werden die Einkaufswagen 13, beispielsweise 8 Stück pro Minute, mit Flüssigkeit gereinigt und danach getrocknet. Dazu weist die Reinigungsvorrichtung 5 zwei parallel zueinander angeordnete Transport-Fördereinrichtungen 8 und 9 auf. Es wird angestrebt, die Transport-Fördereinrichtungen 8 und 9 kürzer auszulegen als es in den Fig. 2 und 3 dargestellt ist. Bevorzugt sind die Transport-Fördereinrichtungen 8 und 9 nur für je zwei Einkaufswagen 13 ausgelegt. Die Transport-Fördereinrichtungen 8 und 9 sind fördertechnisch mittels einer quer dazu verlaufenden Übergabe-Fördereinrichtung 10 verbunden. Die Übergabe-Fördereinrichtung 10 übernimmt am Ende 11 der einem Absprühen dienenden Reinigungs-Förderstrecke 12 die gereinigten, noch nassen Einkaufswagen 13 und führt diese dem Anfang 14 der einem Trocknen dienenden Trocknungs-Förderstrecke 15 zu. Entsprechend werden die Einkaufswagen 13 auf der Reinigungs-Förderstrecke 12 in Richtung eines Pfeiles 16, auf der Übergabe-Fördereinrichtung 10 in Richtung eines Pfeiles 17 und auf der Trocknungs-Förderstrecke 15 in Richtung eines Pfeiles 18 gefördert.

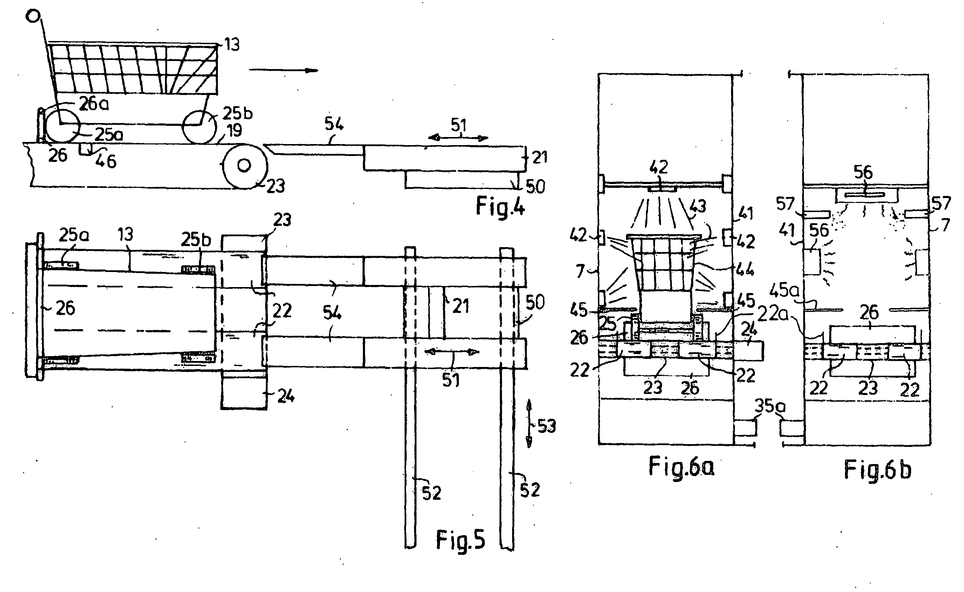

Der Förderung dienen Förderbänder 19 auf der Reinigungs-Förderstrecke 12, Förderbänder 20 auf der Trocknungs-Förderstrecke 15 und ein Schlitten 21 (Fig.4) der Übergabe-Fördereinrichtung 10. Jede Förderstrecke 12 und 15 weist zwei parallele Förderbandstreifen 22 auf, die mittels Umlenkrollen 23 gespannt werden. Der Antrieb der Förderbandstreifen 22 erfolgt beispielsweise mittels Elektromotoren 24. Die Förderbandstreifen 22 haben eine Breite von beispielsweise dem Dreifachen der Breite der Räder 25. Die Breite der Förderbandstreifen ist so bemessen, dass auch unterschiedliche Randständen von Vorder- 25b und Hinterrädern 25a stets verwendbar sind. Die Förderbandstreifen 22 sind mit hochstehenden Seitenführungen 22a versehen, um einem Abrutschen entgegenzuwirken. Die zum Reinigen aufgesprühte Flüssigkeit kann problemlos seitlich und auch durch die Förderbandstreifen 22 ablaufen. An den Förderbändern 19 bzw. den Streifen 22 sind Mitnehmer 26 angeordnet. Diese Mitnehmer 26 greifen an der Reinigungs-Förderstrecke 12 hinter die Hinterräder 25a der Einkaufswagen 13 (Fig.4). An der Trocknungsförderstrecke 15 greifen die Mitnehmer 26 hinter die Vorderräder 25b der Einkaufswagen 13.

Fig. 3 zeigt die Versorgung der Reinigungsvorrichtung 5 mit Reinigungsflüssigkeit auf der Reinigungs-Förderstrecke 12 und mit Trocknungsluft auf der Trocknungs-Förderstrecke 15. Die Versorgung befindet sich unterhalb der Fördereinrichtungen 8, 9 und 10. Mittels einer Frischwasserzuleitung 31 wird Frischwasser in Frischwassertanks 32 eingeleitet. Es muss ständig etwas, wenn auch nur wenig Frischwasser nachgeliefert werden, weil ein Teil durch Verdampfen verloren geht. Ein Tank 33 ist mit Reinigungsmittel befüllt. Dieses Reinigungsmittel soll Werbeaufdrucke schonen und dementsprechend zusammengesetzt sein. Das Reinigungsmittel soll nicht schäumen und ökologisch abbaubar sein. Reinigungsmittel und Frischwasser sowie aufbereitetes Brauchwasser werden als Reinigungsflüssigkeit später noch zu beschreibenden Sprühdüsen zugeleitet. Unterhalb der Übergabe-Fördereinrichtung 10 befinden sich ein Wasserauffangbecken 34 für abgeflossene Reinigungsflüssigkeit, die nun Brauchwasser ist, und ein Becken 35 für den Wasserrücklauf zu einem nicht dargestellten Brauchwassertank, in dem eine Wasseraufbereitung zur Wiederverwendung erfolgt. Wasserauffangbecken 34 und Becken 35 befinden sich bevorzugt unterhalb der Transport-Fördereinrichtungen 8 und 9. Es ist auch möglich, sie zwischen den Radaufhängungen des LKW unterzubringen. Das aufbereitete Brauchwasser wird mit Reinigungsmittel wieder als Reinigungsflüssigkeit mittels Pumpen 35a in den Flüssigkeitskreislauf eingeführt. Die Aufbereitung des Brauchwassers erfolgt vorzugsweise außerhalb des Containers 3 mittels Grob- und Feinfiltern.

In der Mitte zwischen den Förderstrecken 12 zum Reinigen und 15 zum Trocknen befindet sich ein Kontrollbereich 37.

Im Bereich der Trocknungs-Förderstrecken 15 sind Luftbehälter 38 für die Blasluft und ein Behälter 39 für ein aufzutragendes Imprägniermittel vorgesehen.

Beim Betrieb der Reinigungsvorrichtung 5 werden den Einkaufswagen 13 zunächst von Hand konkrete Rückstände wie Papier, Lebensmittelreste, grobe Abfälle entnommen. Dann werden die Einkaufswagen 13 nacheinander von Hand über ein Einlaufblech 40 mit Führungsschienen auf die Reinigungs-Förderstrecke 12 geschoben bzw. bei nicht abgesenktem Container mittels eines Liftes gehoben. Steht das Förderband 19 noch still, dann setzt ein beim Auffahren aktivierter Schalter das Förderband 19 automatisch in Betrieb. Sobald ein Mitnehmer 26 hinter die Hinterräder 25a des jeweiligen Einkaufswagens 13 greift, übernimmt das Förderband 19 den Transport. Fig. 6a zeigt, dass die Reinigungs-Förderstrecke 12 seitlich zwischen Wänden 7, 41 eingeschlossen ist. Die äußere Wand 7 ist dabei eine Containerwand. An den Wänden 7, 41 befinden sich Fein- und Hochdrucksprühdüsen 42. Aus diesen Düsen 42 austretende Reinigungsflüssigkeit in Form von Stahlen 43 erreicht alle zu reinigenden Wagenteile 44 und reinigt sie also wartungsfrei. Da keine Bürsten verwendet werden, tritt kein Verschleiß auf.

Es ist vorgesehen, zur leichteren Revision und Reparatur Baugruppen zu bilden, die einzeln ausgetauscht und herausgenommen werden können. So können beispielsweise die Düsen 42 an der Containerwand 7 zusammen mit einem Wandstück nach außen herausgenommen und gewartet, repariert werden. Gleiches gilt für Einkaufswagen, die bei Fehlbetriebszuständen oder zur Kontrolle auf diese Weisen aus dem Container entfernt werden können.

Im Bereich der Wasser- und Reinigungsmittelzufuhr sind neben dem Förderband 19 Abdeckungen 45 vorgesehen, die die Räder 25 der Einkaufswagen 13 und deren Lager möglichst weitgehend vor einer Berührung mit Reinigungsflüssigkeit schützen. Damit wird verhindert, dass die Räder 25 der Einkaufswagen 13 nach mehrmaligem Reinigen entfettet werden und Lagerschäden eintreten.

Wie bereits beschrieben, ist dafür zu sorgen, dass bei der Auswahl der Reinigungsmittel sichergestellt ist, dass Einkaufswagenwerbung nicht beschädigt wird. Die Verwendung eines nicht schäumenden Mittels, das ökologisch abbaubar ist, wird bevorzugt.

Fig. 4 zeigt das Ende 11 der Reinigungs-Förderstrecke 12. Ein Schalter 46 setzt beim Auflaufen des ersten Einkaufswagens 13 die Übergabe- Fördereinrichtung 10 in Gang. Zu dieser gehört ein Schlitten 21, der auf einem Gleitkörper 50 in Richtung eines Doppelpfeiles 51 verschiebbar ist. Der Gleitkörper 50 seinerseits ist auf Schienen 52 in Richtung eines Doppelpfeiles 53 zwischen den Förderstrecken 12 und 15 verschiebbar. Vom Schlitten 21 ragen Ausgleichsbleche 54 in Richtung auf das Förderband 19 der Reinigungs-Förderstrecke 12. Zum Zwecke der Übernahme eines Einkaufswagens 13 wird der Schlitten 21 an das Förderband 19 herangefahren. Röllchen 26a an den freien Enden der Mitnehmer 26 vermeiden ein Hängenbleiben der Hinterräder 25a an dem Mitnehmer 26. - Ist der Einkaufswagen 13 übernommen, dann fährt der Schlitten 21 vom Förderband 19 weg. Der Gleitkörper 50 fährt den Schlitten 21 beispielsweise mittels eines nicht dargestellten Seilzuges (bevorzugt) zum Förderband 20 der Trocknungs-Förderstrecke 15. An die Stelle des Seilzuges kann auch eine Kette treten. Ebenso ist eine Bandförderung denkbar.

Befindet sich der Schlitten 21 gegenüber der Trocknungs-Förderstrecke 15, dann drückt ein Auswerfer 55 den Einkaufswagen 13 auf deren Förderband 20 bis ein Mitnehmer 26 hinter seine Vorderräder 35b greift.

In Fig. 6b ist die Trocknungs-Förderstrecke 15 ohne Einkaufswagen 13 dargestellt. In der Trocknungs-Förderstrecke 15, den ebenfalls von längs ihrer Längsseiten verlaufender Wände 7, 41 eingegrenzt ist, wird aus Luftdüsen 56 Trockenluft auf die Einkaufswagen geblasen. Die Trocknungsluft kann mittels der Abwärme des LKW-Motors, des Generators und der Antriebsmotoren 24 erwärmt sein. Es ist auch möglich, aus Düsen 57 ein Imprägniermittel auf den Einkaufswagen 13 zu dampfen und ggf. nachgeschaltet zu desinfizieren. Am Ende der Trocknungs-Förderstrecke 15 wird der Einkaufswagen 13 frei und kann von Hand vom einem Auslaufblech 58 abgenommen werden. Auch im Bereich der Trocknungs-Förderstrecke 15 ist ein Radschutz mit Blech- oder Kunststoffteilen 45a vorgesehen, die beispielsweise an den Wänden 7,41 angebracht sein können.

Der Container 3 kann in den Außenwänden 7 mit nicht dargestellten Sichtfenstern versehen sein, um Dritten einen Einblick in den Reinigungsprozess zu ermöglichen. Auch die Trennwände 41 sind wenigstens im oberen Bereich durchsichtig gestaltet, um der Überwachungsperson einen Einblick in den Reinigungsprozess zu gewähren und mögliche Fehler im Arbeitsablauf schnell erkennen zu können.

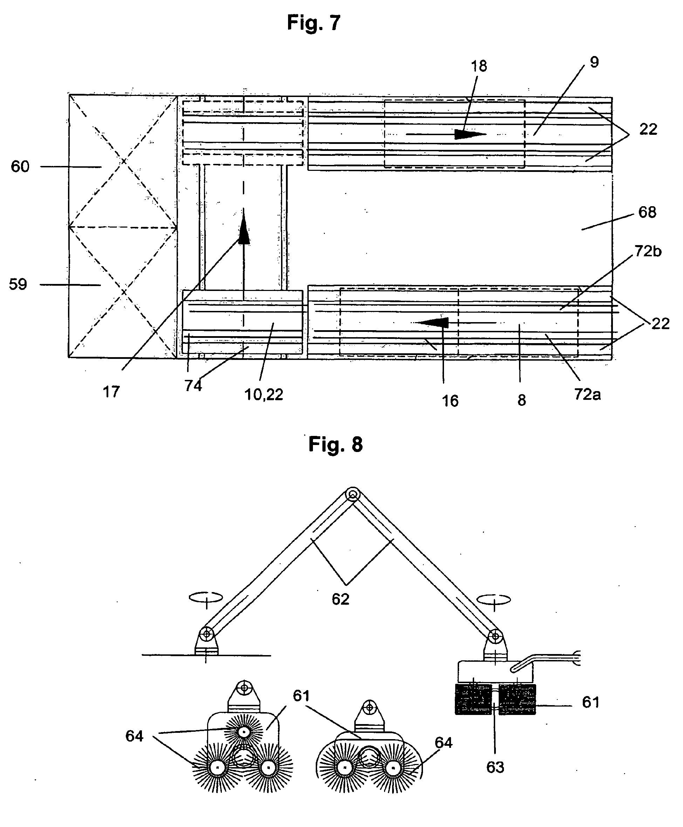

In Fig. 7 ist eine besonders bevorzugte Ausführungsform der Erfindung für die zeitgleiche Aufnahme von 3 bis 5 Einkaufswagen dargestellt. Die Pfeile geben die Vorschubrichtung der Einkaufswagen wieder. Sichtbar sind auch die Übergabe-Fördereinrichtung 10, ausgebildet als Schlitten 21, mit Aufnahme für die Rollen des Einkaufswagen und die Transportförder-Einrichtungen (Reinigungsband 8, Trocknungsband 9), ausgebildet als Paar von Förderbandstreifen 22, nebst der Frischzone 59 des Tanks und der Brauchwasserzone 60 des Tanks. Zwischen den beiden Transportförder-Einrichtungen 8,9 spannt sich eine begehbare Zone 68 auf, die Zugang und Montage ermöglicht. Die Vorderräder 25b lauf in zwei U-Schienen 72a,72b.

In Fig. 8 a bis c ist eine Bürstenvorrichtung 61 mit drehbarem Schwenkbügel 62 dargestellt, die Mittels manueller Betätigung, etwa mittels eines Hebels, über den Einkaufswagengriff 63 abgesenkt wird, so dass der Griff an zumindest zwei beabstandeten Seiten mittels Bürsten 64 gereinigt werden kann. Die Bürstenvorrichtung 61 kann zwei (Fig. 8 b) oder drei (Fig. 8c) Bürsten 64 aufweisen.

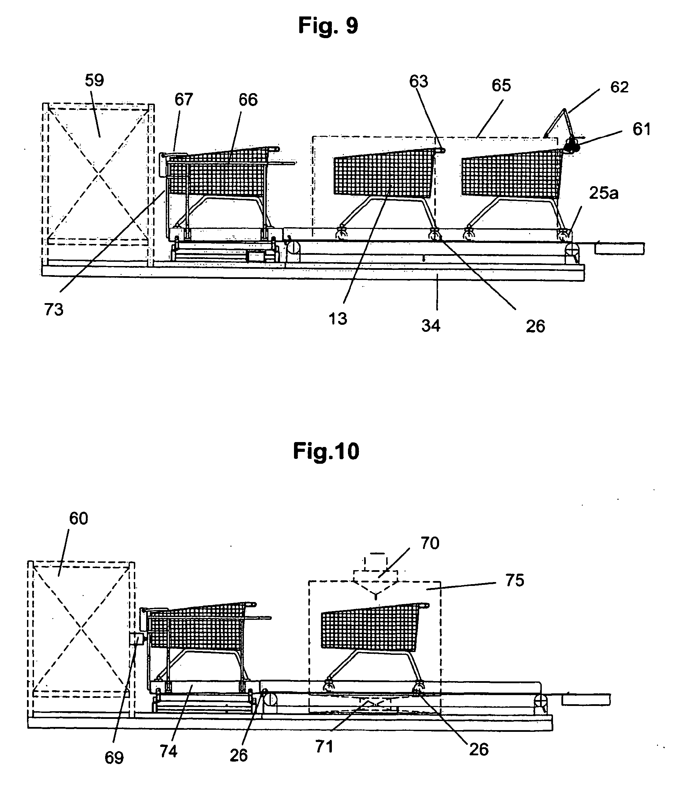

In Fig. 9 ist die Reinigungs-Förderstrecke 12 der Transportförder-Einrichtungen 8 dargestellt, auf der sich zeitgleich zwei Einkaufswagen 13 befinden, die in einer Reinigungsbox 65 über einem Wasserauffangbecken 34 mittels Wasserstahldüsen und einem Wasserschwall in Form eines "Wasservorhanges" gereinigt werden. Dargestellt sind auch die Mitnehmer 26, die hinter die Hinterräder 25a des Einkaufswagens 13 längs der Reinigungs-Förderstrecke 12 greifen, um diesen vorzutreiben. Die Wanne 34 nimmt das Ablaufwasser auf.

Um zu verhindern, dass der Einkaufswagen bei der Beförderung auf dem Schlitten 22 kippt, sind seitliche mit dem Schlitten 22 verbundene Stützglieder 66 vorgesehen, die den Einkaufswegen vor dem Umkippen sichern. Gleichzeitig wird der Einkaufswagen durch zwei Niederhalter 67 fixiert und an den Anschlag 73 herangezogen, während er mit den Rädern auf der Aufnahme des Schlittens 21 ruht. Die Aufnahmen 74 hat U-Schienenform.

Die Übergabe an das Trocknungsband 9 (Trocknungs-Förderstrecke 15) erfolgt wie aus Fig. 10 ersichtlich mittels einer hydraulischen Vorrichtung 69, die an der hinteren Containerwand angebracht ist und den Einkaufswagen 13 auf das zweite Förderband aufschiebt. Ebenfalls gezeigt ist die Brauchwasserzone 60 des Tanks. Die Trocknung erfolg mittels über den Einkaufswagen angebrachten Warmluftgebläse 70. Die warme Luft wird über den Abluftkanal 71 abgeleitet.

## Patentansprüche

1. Reinigungsvorrichtung für Einkaufswagen (13), in der die Einkaufswagen (13) in einem Behälter (3) mittels einer Reinigungsflüssigkeit mit Flüssigkeitsstrahlen besprüht werden, wobei der Behälter (3) mittels eines Fahrzeuges (1) zu den einzelnen Einsatzorten transportierbar ist, **gekennzeichnet durch**
• in dem Behälter (3) angeordnete Transport-Fördereinrichtungen (8,9) für eine Mehrzahl von Einkaufswagen (13), von denen zumindest eine längs ihrer Förderstrecke (12) dem reinigenden Besprühen mit einer Reinigungsflüssigkeit und zumindest eine längs ihrer Förderstrecke (15) dem Trocknen mit aufgeblasener Luft dient,
• die Transport-Fördereinrichtungen (8,9) parallel nebeneinander in gegenläufiger Richtung betreibbar sind,
• wobei beide Transport-Fördereinrichtungen (8,9) fördertechnisch mittels einer Übergabe-Fördereinrichtung (10) verbunden sind und
• die Übergabe-Fördereinrichtung (10) einen zwischen den Transport-Fördereinrichtungen (8,9) verfahrbaren Schlitten (21) aufweist.

2. Reinigungsvorrichtung nach Anspruch 1, **dadurch gekennzeichnet, dass** die Übergabe-Fördereinrichtung (10) am Ende (11) der dem Absprühen dienenden Reinigungs-Förderstrecke (12) die gereinigten, noch nassen Einkaufswagen (13) übernimmt und dem Anfang (14) der dem Trocknen dienenden Trocknungs-Förderstrecke (15) zuführt.

3. Reinigungsvorrichtung nach einem oder mehreren der vorhergehenden Ansprüche, **dadurch gekennzeichnet, dass** Transport-Fördereinrichtungen (8,9) Förderbänder (19,20) aufweisen, auf denen die Einkaufswagen (13) mittels Mitnehmern (26), vorzugsweise hinter den Hinterrädern, in Förderrichtung förderbar sind.

4. Reinigungsvorrichtung nach einem oder mehreren der vorhergehenden Ansprüche, **dadurch gekennzeichnet, dass** jeweils ein Paare von Förderbandstreifen (22) vorgesehen ist, das als Auflagen für die ein Paar Räder der Einkaufswagen (13), vorzugsweise die Hinterräder (25a), dient, vorzugsweise jeder der Förderbandstreifen eine Breite von 5 bis 20 cm hat und ggf. das andere Räderpaar, vorzugsweise die Vorderräder (25b), auf einer oder jedes der beiden Räder auf einer separaten Schiene geführt ist.

5. Reinigungsvorrichtung nach Anspruch 1, **dadurch gekennzeichnet, dass** der Schlitten (21) zur Übergabe von Einkaufswagen (13) zusätzlich zur Übergabebewegung auf die Transport-Fördereinrichtungen (8,9) zu und von diesen wegbewegbar ist.

6. Reinigungsvorrichtung nach Anspruch 1 oder 5, **dadurch gekennzeichnet, dass** der Schlitten (21) Ausgleichsbleche (54) aufweist, die der Übernahme der Einkaufswagen (13) von der Übergabe-Fördereinrichtung (10) und deren Übergabe an die Transport-Fördereinrichtung (9) dienen, indem sie allein oder mit dem Schlitten (21) an deren Förderbänder (22) heranfahren.

7. Reinigungsvorrichtung nach einem der Ansprüche 6 bis 8, **dadurch gekennzeichnet, dass** der Schlitten (21) mittels eines Seilzuges, einer Kette oder eines Transportbandes von der einen zu der anderen Transport-Fördereinrichtung (8,9) verschiebbar ist.

8. Reinigungsvorrichtung nach einem oder mehreren der vorhergehenden Ansprüche 1 oder 5 bis 7, **dadurch gekennzeichnet, dass** die Einkaufswagen (13) mittels eines Auswerfers (55) von dem Schlitten (21) auf die dem Trocknen dienende Förderstrecke (15) aufschiebbar sind.

9. Reinigungsvorrichtung nach einem oder mehreren der vorhergehenden Ansprüche, **dadurch gekennzeichnet, dass** die Transport-Fördereinrichtungen (8,9) in Förderrichtung beiderseits mit Schutzwänden (7,41) versehen sind, die geeignet sind zumindest die Sprühzone von der Trockenzone zu trennen.

10. Reinigungsvorrichtung nach einem oder mehreren der vorhergehenden Ansprüche, **dadurch gekennzeichnet, dass** beiderseits der Transport-Fördereinrichtung (8) für das reinigende Besprühen mit Flüssigkeit Sprühdüsen (42) vorgesehen sind, deren Sprühstrahlen (43) auf die Einkaufswagen (13) gerichtet sind, vorzugsweise in zumindest einem Bereich einer vertikalen Zone quer zur Laufrichtung von 5 bis 20 cm.

11. Reinigungsvorrichtung nach einem oder mehreren der vorhergehenden Ansprüche, **dadurch gekennzeichnet, dass** beiderseits der Transport-Fördereinrichtung (9) für das Aufblasen von Trocknungsluft Luftblasdüsen (56) bzw. ein Warmluftgebläse (70) vorgesehen ist.

12. Reinigungsvorrichtung nach einem oder mehreren der vorhergehenden Ansprüche, **dadurch gekennzeichnet, dass** die Trocknungsluft mittels Abwärme vom Antriebsmotor des Fahrzeuges erwärmt wird.

13. Reinigungsvorrichtung nach einem oder mehreren der vorhergehenden Ansprüche, **dadurch gekennzeichnet, dass** der die Reinigungsvorrichtung (5) aufnehmende Behälter (3) ein Container ist, der mittels eines Fahrzeuges (1) transportierbar und ggf. von dem Fahrzeug (1) absetzbar ist.

14. Reinigungsvorrichtung nach einem oder mehreren der vorhergehenden Ansprüche, **dadurch gekennzeichnet, dass** die Förderbänder (22) mit Seitenführungen (22a) für die Räder (25a und/oder 25b) versehen sind.

15. Reinigungsvorrichtung nach einem oder mehreren der vorhergehenden Ansprüche, **dadurch gekennzeichnet, dass** die Fördereinrichtungen (8,9) und die Übergabevorrichtung (10) sowie die Auffangvorrichtungen für Wasser (34) und die Auffangvorrichtungen für Abluft (71) auf einer oder mehren in den Container herein- und herausschiebbaren Plattformen montiert sind.

16. Reinigungsvorrichtung nach einem oder mehreren der vorhergehenden Ansprüche, **dadurch gekennzeichnet, dass** die Übergabe-Fördereinrichtung (10) einen Niederhalter (67) für den Einkaufswagen (13) in der Übergabe-Fördereinrichtung (10) aufweist.

17. Reinigungsvorrichtung nach einem oder mehreren der vorhergehenden Ansprüche, **dadurch gekennzeichnet, dass** die Reinigungsvorrichtung weiterhin eine schwenkbare Bürstenvorrichtung (61) zur Absenkung von Bürsten (64) über den Griff (63) des Einkaufswagens zur Reinigung desselben aufweist.

18. Verfahren zur Reinigung von Einkaufswagen (13), in der die Einkaufswagen (13) in einem Behälter (3) mittels einer Reinigungsflüssigkeit mit Flüssigkeitsstrahlen besprüht werden, wobei der Behälter (3) mittels eines Fahrzeuges (1) zu den einzelnen Einsatzorten transportierbar ist, **gekennzeichnet dadurch, dass**
• die Einkaufswagen auf in dem Behälter (3) angeordnete Transport-Fördereinrichtungen (8,9) für eine Mehrzahl von Einkaufswagen (13) transportiert werden, von denen zumindest eine längs ihrer Förderstrecke (12) dem reinigenden Besprühen mit einer Reinigungsflüssigkeit und zumindest eine längs ihrer Förderstrecke (15) dem Trocknen mit aufgeblasener Luft dient,
• die Transport-Fördereinrichtungen (8,9) parallel nebeneinander in gegenläufiger Richtung betrieben werden,
• die beiden Transport-Fördereinrichtungen (8,9) fördertechnisch mittels einer Übergabe-Fördereinrichtung (10) verbunden sind,
• die Übergabe-Fördereinrichtung (10) am Ende (11) der dem Absprühen dienenden Reinigungs-Förderstrecke (12) die gereinigten, noch nassen Einkaufswagen (13) übernimmt und dem Anfang (14) der dem Trocknen dienenden Trocknungs-Förderstrecke (15) zuführt und
• die Transport-Fördereinrichtungen (8,9) Förderbänder (19,20) sind, auf denen die Einkaufswagen (13) mittels Mitnehmern (26) in Förderrichtung befördert werden.

19. Verfahren nach Anspruch 18, **dadurch gekennzeichnet, dass** die gesprühte Reinigungsflüssigkeit nach dem Sprühen gesammelt, reinigend aufbereitet und wieder dem Sprühprozess zugeführt wird.

20. Verfahren nach Anspruch 18, **dadurch gekennzeichnet, dass** der die Reinigungsvorrichtung (5) aufnehmende Behälter (3) ein Container ist, der mittels eines Fahrzeuges (1) transportierbar und ggf. von dem Fahrzeug (1) absetzbar ist.

21. Verfahren nach Anspruch 18, **dadurch gekennzeichnet, dass** das zweite Förderband schneller läuft als das erster Förderband, vorzugsweise um zumindest 4 cm/sec.

22. Verfahren nach Anspruch 18, **dadurch gekennzeichnet, dass** die Übergabe-Fördereinrichtung (10) einen zwischen den Transport-Fördereinrichtungen (8,9) verfahrbaren Schlitten (21) aufweist.

## Claims

1. A cleaning device for shopping trolleys (13), in which the shopping trolleys (13) are sprayed in a container (3) with a cleaning fluid in the form of fluid jets, the container (3) being transportable to the individual sites of use by means of a vehicle (1),
**characterised by**
- transport conveyor devices (8, 9) arranged in the container (3) for a plurality of shopping trolleys (13), at least one of which is used for cleaning spraying with a cleaning fluid along its conveying section (12), and at least one of which is used for drying with inflated air along its conveying section (15),
- in that the transport conveyor devices (8, 9) are operateable parallel next to each other in opposite directions,
- wherein both transport conveyor devices (8, 9) are connected in conveyor technology by means of a transfer conveyor device (10) and
- in that the transfer conveyor device (10) comprises a slide (21) that is displaceable between the transport conveyor devices (8, 9).

2. The cleaning device according to Claim 1, **characterised in that** the transfer conveyor device (10) takes over the cleaned, still wet shopping trolleys (13) at the end of the cleaning conveying section (12) used for spraying, and feeds it to the start (14) of the drying conveying section (15) used for drying.

3. The cleaning device according to one or more of the preceding claims, **characterised in that** transport conveyor devices (8, 9) have conveyor belts (19, 20) on which the shopping trolleys (13) can be conveyed in the direction of conveying by means of carriers (26), preferably behind the rear wheels.

4. The cleaning device according to one or more of the preceding claims, **characterised in that** a pair of conveyor belt strips (22) is provided to serve as supports for one pair of wheels of the shopping trolleys (13), preferably the rear wheels (25a), **in that** each of the conveyor belt strips preferably has a width of 5 to 20 cm, and **in that**, if necessary, one or each of the two wheels of the other pair of wheels, preferably the front wheels (26b), is or are guided on a separate rail.

5. The cleaning device according to Claim 1, **characterised in that** the slide (21) for transferring shopping trolleys (13) can, in addition to the transfer movement to the transport conveyor devices (8, 9), be moved to and from them.

6. The cleaning device according to Claim 1 or 5, **characterised in that** the slide (21) has compensating plates (54) which serve to transfer the shopping trolleys (13) from the transfer conveying device (10) and to transfer them to the transport conveying device (9), the trolleys approaching their conveyor belts (22) alone or with the slide (21).

7. The cleaning device according to one of Claims 6 to 8, **characterised in that** the slide (21) is displaceable by means of a pull rope, a chain or a conveyor belt from one transport conveying device (8, 9) to the other.

8. The cleaning device according to one or more of the preceding claims 1 or 5 to 7, **characterised in that** the shopping trolleys (13) can be slid from the slide (21) onto the conveying section (15) used for drying by means of an ejector (55).

9. The cleaning device according to one or more of the preceding claims, **characterised in that** the transport conveying devices (8, 9) are provided in the conveying direction, on both sides, with protective walls (7, 41) which are suitable for separating at least the spraying zone from the drying zone.

10. The cleaning device according to one or more of the preceding claims, **characterised in that** spray nozzles (42) are provided on both sides of the transport conveying device (8) for cleaning spraying with fluid, the spray jets (43) of which nozzles are directed onto the shopping trolleys (13), preferably in at least one region of a vertical zone transverse to the direction of running from 5 to 20 cm.

11. The cleaning device according to one or more of the preceding claims, **characterised in that** air blowing nozzles (56) or a hot air fan (70) is provided on both sides of the transport conveying device (9) for blowing on drying air.

12. The cleaning device according to one or more of the preceding claims, **characterised in that** the drying air is heated by means of waste heat from the drive motor of the vehicle.

13. The cleaning device according to one or more of the preceding claims, **characterised in that** the container (3) housing the cleaning device (5) is a container which is transportable by means of a vehicle (1) and can, if necessary be deposited by the vehicle (1).

14. The cleaning device according to one or more of the preceding claims, **characterised in that** the conveyor belts (22) are provided with lateral guides (22a) for the wheels (25a and/or 25b).

15. The cleaning device according to one or more of the preceding claims, **characterised in that** the conveyor devices (8, 9) and the transfer device (10), as well as the collection devices for water (34) and the collection devices for exhaust air (71), are mounted on one or more platforms that can be slid in and out of the container.

16. The cleaning device according to one or more of the preceding claims, **characterised in that** the transfer conveyor device (10) has a holding down device (67) for the shopping trolley (13) in the transfer conveying device (10).

17. The cleaning device according to one or more of the preceding claims, **characterised in that** the cleaning device also has a swivel brush device (61) for lowering brushes (64) over the handle (63) of the shopping trolley for cleaning.

18. A method for cleaning shopping trolleys (13) in which the shopping trolleys (13) are sprayed in a container (3) with cleaning fluid in the form of fluid jets, wherein the container (3) is transportable by means of a vehicle (1) to the individual sites of use,
**characterised in that**
- the shopping trolleys are transported on transport conveyor devices (8, 9) for a plurality of shopping trolleys (13), at least one of which devices is used for spraying with a cleaning fluid along its conveying section (12), and at least one of which is used to dry with inflated air along its conveying section (15),
- the transport conveyor devices (8, 9) are operated parallel next to each in opposite directions,
- the two transport conveyor devices (8, 9) are connected in conveyor technology by means of a transfer conveying device (10),
- the transfer conveying device (10) takes over the cleaned, still wet shopping trolleys (13) at the end (11) of the cleaning conveying section (12) used for spraying, and feeds them to the start (14) of the drying conveying section (15) used for drying, and
- the transport conveying devices (8, 9) are conveyor belts (19 ,20) on which the shopping trolleys (13) are conveyed in the direction of conveying by means of carriers (26).

19. The method according to Claim 18, **characterised in that** the sprayed cleaning fluid is collected after spraying, cleaned and fed back into the spraying process.

20. The method according to Claim 18, **characterised in that** the container (3) housing the cleaning device (5) is a container which is transportable by means of a vehicle (1) and can be deposited by the vehicle (1) if necessary.

21. The method according to Claim 18, **characterised in that** the second conveyor belt runs more quickly than the first conveyor belt, preferably by at least 4 cm/sec.

22. The method according to Claim 18, **characterised in that** the transfer conveying device (10) has a slide (21) that is displaceable between the transport conveying devices (8, 9).

## Revendications

1. Dispositif de nettoyage pour chariots d'achat (13), dans lequel les chariots d'achat (13) dans un conteneur (3) sont pulvérisés au moyen d'un liquide de nettoyage avec des jets de liquide, le conteneur (3) étant transportable au moyen d'un véhicule (1) sur les différents sites de mise en oeuvre, **caractérisé**
- **par** des systèmes de convoyage - transport (8,9), disposés dans le conteneur (3), pour plusieurs chariots d'achat (13), dont au moins un, le long de sa distance de convoyage (12), sert à la pulvérisation nettoyante avec un liquide de nettoyage et au moins un, le long de sa distance de convoyage (15), sert au séchage avec de l'air soufflé,
- en ce que les systèmes de convoyage - transport (8,9) peuvent fonctionner parallèlement les uns aux autres en sens inverse,
- où les deux systèmes de convoyage - transport (8,9) sont reliés en terme de mécanutention au moyen d'un système de convoyage - transfert (10) et
- le système de convoyage - transfert (10) présente un coulisseau (21) déplaçable entre les systèmes de convoyage - transport (8,9).

2. Dispositif de nettoyage selon la revendication 1, **caractérisé en ce que** le système de convoyage - transfert (10) prend en charge les chariots d'achat (13) nettoyés encore humides à la fin (11) de la distance de convoyage - nettoyage (12) servant à la pulvérisation et les amène au début (14) de la distance de convoyage - séchage (15) servant au séchage.

3. Dispositif de nettoyage selon l'une ou plusieurs des revendications précédentes, **caractérisé en ce que** les systèmes de convoyage - transport (8,9) présentent des bandes transporteuses (19,20) sur lesquelles peuvent être convoyés les chariots d'achat (13) au moyen de tocs d'entraînement (26), de préférence placés derrière les roues arrière, dans la direction de convoyage.

4. Dispositif de nettoyage selon l'une ou plusieurs des revendications précédentes, **caractérisé en ce que** l'on prévoit respectivement une paire de courroies de bande transporteuse (22), qui sert de support pour une paire de roues de chariots d'achat (13), de préférence de roues arrière (25a), de préférence chacune des courroies de bande transporteuse a une largeur de 5 à 20 cm et, le cas échéant, l'autre paire de roues, de préférence les roues avant (25b), est guidée sur une ou chacune des deux roues sur un rail séparé.

5. Dispositif de nettoyage selon la revendication 1, **caractérisé en ce que** le coulisseau (21) pour le transfert des chariots d'achat (13) peut être déplacé, en plus du mouvement de transfert sur les systèmes de convoyage - transport (8,9), en direction de ceux-ci et à partir de ceux-ci.

6. Dispositif de nettoyage selon la revendication 1 ou 5, **caractérisé en ce que** le coulisseau (21) présente des tôles de compensation (54), qui servent à la prise en charge des chariots d'achat (13) depuis le système de convoyage - transfert (10) et à leur transfert sur le système de convoyage - transport (9), en les rapprochant, seuls ou avec le coulisseau (21), de leurs bandes transporteuses (22).

7. Dispositif de nettoyage selon l'une des revendications 6 à 8, **caractérisé en ce que** le coulisseau (21) est coulissable au moyen d'un câble, d'une chaîne ou d'une bande transporteuse d'un système de convoyage - transport (8,9) à l'autre.

8. Dispositif de nettoyage selon l'une ou plusieurs des revendications précédentes 1 ou 5 à 7, **caractérisé en ce que** les chariots d'achat (13) peuvent être poussés au moyen d'un éjecteur (55) depuis le coulisseau (21) sur la distance de convoyage (15) servant au séchage.

9. Dispositif de nettoyage selon l'une ou plusieurs des revendications précédentes, **caractérisé en ce que** les systèmes de convoyage - transport (8, 9) dans la direction du convoyage sont dotés des deux côtés de parois protectrices (7, 41), qui sont appropriées à séparer au moins la zone de pulvérisation de la zone de séchage.

10. Dispositif de nettoyage selon l'une ou plusieurs des revendications précédentes, **caractérisé en ce que**, des deux côtés du système de convoyage - transport (8) pour la pulvérisation nettoyante avec le liquide, on prévoit des buses de pulvérisation (42) dont les jets de pulvérisation (43) sont dirigés sur les chariots d'achat (13), de préférence au moins dans une partie d'une zone verticale transversalement au sens de la marche de 5 à 20 cm.

11. Dispositif de nettoyage selon l'une ou plusieurs des revendications précédentes, **caractérisé en ce que**, des deux côtés du système de convoyage - transport (9) pour le soufflage de l'air de séchage, on prévoit des buses de soufflage d'air (56) ou une soufflerie d'air chaud (70).

12. Dispositif de nettoyage selon l'une ou plusieurs des revendications précédentes, **caractérisé en ce que** l'air de séchage est chauffé au moyen de la chaleur perdue d'un moteur d'entraînement du véhicule.

13. Dispositif de nettoyage selon l'une ou plusieurs des revendications précédentes, **caractérisé en ce que** le conteneur (3) accueillant le dispositif de nettoyage (5) est un conteneur qui peut être transporté au moyen d'un véhicule (1) et qui peut être, le cas échéant, déposé par le véhicule (1).

14. Dispositif de nettoyage selon l'une ou plusieurs des revendications précédentes, **caractérisé en ce que** les bandes transporteuses (22) sont dotées de guidages latéraux (22a) pour les roues (25a et/ou 25b).

15. Dispositif de nettoyage selon l'une ou plusieurs des revendications précédentes, **caractérisé en ce que** les systèmes de convoyage (8,9) et le dispositif de transfert (10) ainsi que les dispositifs de captage pour l'eau (34) et les dispositifs de captage pour l'air d'échappement (71) sont montés sur une ou plusieurs plates-formes pouvant être coulissées dans et hors du conteneur.

16. Dispositif de nettoyage selon l'une ou plusieurs des revendications précédentes, **caractérisé en ce que** le système de convoyage - transfert (10) présente un serre-flan (67) pour les chariots d'achat (13) dans le système de convoyage - transfert (10).

17. Dispositif de nettoyage selon l'une ou plusieurs des revendications précédentes, **caractérisé en ce que** le dispositif de nettoyage comprend également un dispositif de brosses articulé (61) pour abaisser les brosses (64) au-dessus de la poignée (63) du chariot pour le nettoyage de celle-ci.

18. Procédé de nettoyage de chariots d'achat (13), dans lequel les chariots d'achat (13) sont pulvérisés dans un conteneur (3) au moyen d'un liquide de nettoyage avec des jets de liquide, le conteneur (3) pouvant être transporté au moyen d'un véhicule (1) sur les différents sites de mise en oeuvre, **caractérisé en ce que** :
- les chariots d'achat sont transportés sur des systèmes de convoyage - transport (8,9), disposés dans le conteneur (3), pour plusieurs chariots d'achat (13), dont au moins un, le long de sa distance de convoyage (12), sert à la pulvérisation nettoyante avec un liquide de nettoyage et au moins un, le long de sa distance de convoyage (15), sert au séchage avec de l'air soufflé,
- les systèmes de convoyage - transport (8,9) fonctionnent parallèlement les uns aux autres en sens inverse,
- les deux systèmes de convoyage - transport (8,9) sont reliés en terme de mécanutention au moyen d'un système de convoyage - transfert (10),
- le système de convoyage - transfert (10) prend en charge les chariots d'achat (13) nettoyés encore humides à la fin (11) de la distance de convoyage - nettoyage (12) servant à la pulvérisation et les amène au début (14) de la distance de convoyage - séchage (15) servant au séchage et
- les systèmes de convoyage - transport (8,9) sont des bandes transporteuses (19,20) sur lesquelles les chariots d'achat (13) sont convoyés au moyen de tocs d'entraînement (26) dans la direction de convoyage.

19. Procédé selon la revendication 18, **caractérisé en ce que** le liquide de nettoyage pulvérisé est collecté après la pulvérisation, soumis à un traitement de purification et de nouveau renvoyé dans le procédé de pulvérisation.

20. Procédé selon la revendication 18, **caractérisé en ce que** le conteneur (3) accueillant le dispositif de nettoyage (5) est un conteneur qui peut être transporté au moyen d'un véhicule (1) et, le cas échéant, peut être déposé par le véhicule (1).

21. Procédé selon la revendication 18, **caractérisé en ce que** la deuxième bande transporteuse roule plus rapidement que la première bande transporteuse, de préférence à au moins 4 cm/sec.

22. Procédé selon la revendication 18, **caractérisé en ce que** le système de convoyage - transfert (10) présente un coulisseau (21) déplaçable entre les systèmes de convoyage - transport (8,9).
